(19) **Europäisches Patentamt**

**European Patent Office**

**Office européen des brevets**

(11) Publication number : **0 348 160 B1**

(12) ## EUROPEAN PATENT SPECIFICATION

(45) Date of publication of patent specification : **16.09.92 Bulletin 92/38**

(51) Int. Cl.⁵ : **B60B 33/00, B60B 33/02**

(21) Application number : **89306241.4**

(22) Date of filing : **20.06.89**

(54) **A castor.**

Consolidated with 89907786.1/0444041 (European application No./publication No.) by decision dated 12.11.91.

(30) Priority : **20.06.88 GB 8814609**

(43) Date of publication of application : **27.12.89 Bulletin 89/52**

(45) Publication of the grant of the patent : **16.09.92 Bulletin 92/38**

(84) Designated Contracting States : **DE ES GB**

(56) References cited :
**DE-A- 2 244 734**
**DE-A- 2 910 555**

(56) References cited :
**DE-A- 3 037 695**
**US-A- 3 146 872**
**US-A- 3 305 064**
**US-A- 4 013 808**

(73) Proprietor : **FLEXELLO CASTORS & WHEELS P.L.C.**
**Bath Road**
**Slough Bucks. SL1 48D (GB)**

(72) Inventor : **Tooth, Arthur Cecil**
**Porters Cottage**
**Touchen End Maidenhead Berkshire (GB)**

(74) Representative : **Everitt, Christopher James Wilders et al**
**F.J. CLEVELAND & COMPANY 40/43 Chancery Lane**
**London WC2A 1JQ (GB)**

EP 0 348 160 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a castor comprising a wheel which is journaled on an axle in a fork which is arranged for swivelling movement about an axis which is normal to the axis of the axle or which is offset from the axis of the axle and parallel to a normal to the axis of the axle, the castor being for use on a travelling walkway.

Castors designed for use on travelling walkways have been of three major types. One type of such a castor comprises a conventional castor which is fitted with a wheel having two axially-spaced apart circumferentially continuous ribs projecting radially outwardly from its rib surface. The axial spacing between the ribs is selected so that they drop into matching slots formed in the moving walkway. Weight born by the castor is transferred to a load bearing foot element which is rigidly attached to the fork of the castor and which has an outwardly projecting foot portion at its bottom which rests upon the upper surface of the walkway. US-A3305064 and DE-A-2910555 disclose examples of that type of castor. Another type of castor for use on a travelling walkway is provided with a pair of narrow wheels which act in substantially the same way as the pair of ribs of the first type of castor but which are allowed to rotate one relative to the other so that the steering difficulties inherent with the first type of castor are avoided. Problems are experienced in use of both these types of castors due to the outwardly projecting foot which tends to catch the lower part of people's legs, feet or ankles. A third type of castor for use on travelling walkways is basically similar to the twin wheeled furniture castor (see EP-A-0054797) but, in addition, is provided with a friction pad on the under-side of the central body portion between the two wheels which functions as a brake by engagement with the surface of the walkway between grooves into which the wheel ribs drop when the castor is engaged with the walkway.

DE-A-2244734 discloses a castor for use on a travelling walkway, the wheel having a single profiled annular tyre portion which is substantially narrower than the remainder of the wheel in a direction which is parallel to the axis of the wheel and which is sized and shaped to be received within a slot of the walkway, the annular tyre portion projecting radially-outwardly from a portion of the remainder of the wheel which is between a pair of annular shoulder portions which are formed by the wheel and which are spaced apart in the direction that is parallel to the axis of the wheel. The castor is provided with two plate-like load bearing members, each of which is fixed to a respective limb of the fork, one on either side of the wheel. The lower edges of the load bearing members seat in lateral grooves formed in the walkway normal to the slots that receive the wheel. The load bearing members project laterally beyond the fork on either side of the castor and are thus liable to catch people's legs, feet or ankles.

US-A-4013808 discloses a single wheel castor which is provided on either side of the wheel, within the space encompassed by the limbs of the fork, with a saucer-shaped cover of a synthetic resilient material which is of a flexible configuration for sealing the moving parts of the castor against the entrance of foreign matter.

An object of this invention is to provide a castor for use on a travelling walkway which does not suffer from the disadvantages of the known types of castor for that use discussed above and which is simple and compact in construction.

According to this invention there is provided a castor of the type defined in the precharacterizing past of claim 1 according to DE-A-2244734, but distinguished by the characterized part of claim 1.

Arranging the lower portion of the or each load bearing element so that is projects inwardly towards the radially-outwardly projecting tyre portion, terminating close to the side of that tyre portion, radially-outwardly with respect to and past the respective one of the pair of shoulder portions of the wheel leads to the castor being compact and minimises the problem of laterally-outwardly projecting portions which are liable to catch people's legs, feet or ankles

Preferred features of a castor in which this invention is embodied are claimed in claims 2 to 10.

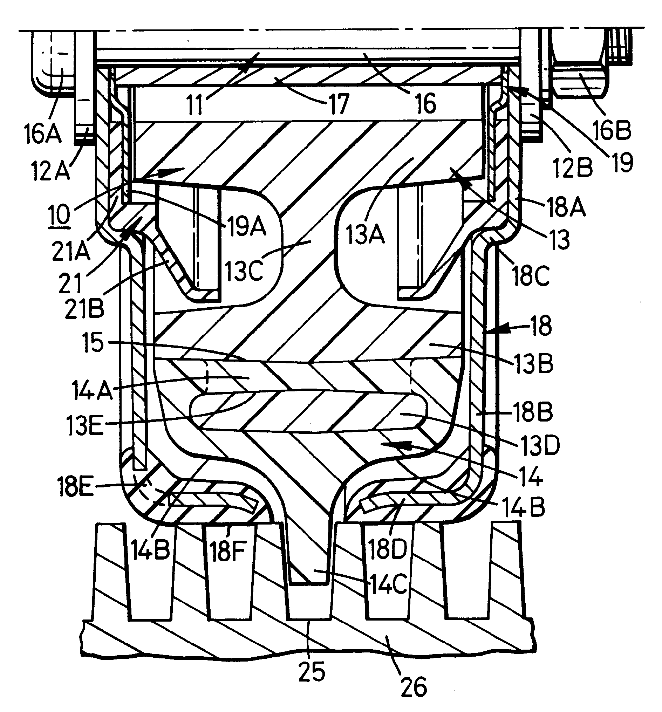

One form of castor in which this invention is embodied is described now by way of example with reference to the accompanying drawing which is a transverse vertical cross-section of the lower portion of the castor below the axis of the wheel on a moving walkway.

The drawing shows a castor comprising a wheel 10 which is journaled on an axle 11 in a fork. The fork is an inverted U comprising two triangular side portions or limbs 12A and 12B depending from either side of a connecting body piece. The latter is formed with an aperture which receives a hub assembly. The hub assembly includes a double rolling bearing by which the fork is arranged for swivelling movement about the axis of the hub assembly which is normal to but laterally offset from the axis of the axle 11.

The wheel 10 comprises an injection-moulded main portion 13 formed of polypropylene, and a polyurethane tyre 14. The main portion 13 has a central hub portion 13A which is journaled on the axle 11 and which extends between the limbs 12A and 12B of the fork with a clearance therebetween at either end. The main portion 13 also comprises a circumferentially extending cylindrical rim 13B which is spaced radially outwards from the hub portion 13A and which is connected thereto by a thinner radially extending annular web portion 13C. The length of the rim 13B in a direction parallel to the axis of the axle 11 is less than the length of the hub portion 13A in that direction.

There is a circumferentially continuous radially outwardly directed projection 13D projecting from the centre of the radially outer face of the cylindrical rim 13B. The length of the projection 13D in the direction parallel to the axis of the axle 11 is less than that of the cylindrical rim 13B but greater than that of the radially extending annular web portion 13C. The projection has a circumferential array of circumferentially spaced apertures 13E formed through it from side to side. The tyre 14 is formed by injection moulding onto the main wheel portion 13 so that integral strand-like portions 14A of it extend through each of the apertures 13E so that the tyre 14 is connected to the main portion 13 and held circumferentially relative thereto.

The tyre 14 is profiled externally so that it has the width of the rim 13B at its radially innermost edge 15, where it is bonded to the rim 13B, and radially-outwardly therefrom to a pair of shoulders 14B which are disposed radially-outwardly with respect to the projection 13D, and is flared with a reducing width from the shoulders 14B in the outwards direction to a smaller width outer portion 14C which forms its tread. The width of the tyre 14 at its radially outer portion 14C is selected so that it is as wide as it can be and yet narrow enough for there to be a clearance between it and either side of a groove 25 of a travelling walkway 26 within which it is received and which has standard dimensions.

The axle 11 comprises a bolt 16 and a cylindrical sleeve 17 which surrounds the shank of the bolt 16 and extends between the limbs 12A and 12B of the fork 12. A dished annular member 18 is carried by the axle 16 between either end of the sleeve 17 and the adjacent fork limb 12A, 12B. A dished metal reinforcing washer 19 is clamped between each dished annular member 18 and the sleeve 17.

The two dished annular members 18 are similar and the one shown on the right in the drawing will be described in detail. It comprises a steel pressing and a tyre portion. The steel pressing comprises a radially-innermost flat annular portion 18A which is connected to a radially-outer flat annular portion 18B by an annular step 18C, so that the outer portion 18B is further from the respective fork limb 12B than is the inner portion 18A, and a generally cylindrical radially-outer portion 18D which is slightly outwardly curved. A circumferential array of holes 18E (see the left hand member 18 in the drawing) are formed at spaced locations in the annular corner formed between the outer flat annular portion 18B and the radially-outer portion 18D. The tyre portion 18F is annular and is formed of an elastomeric material which is moulded around the rim formed by the radially-outer portion 18D and about the radially-outer part of the radially-outer flat annular portion 18B so that its material extends through the holes 18E whereby the tyre 18F is anchored to the pressing. The outer periphery of the dished annular member 18 is generally cylindrical and it extends towards and close to the tyre 14, radially-outwardly with respect to and past the respective shoulder 14B of the tyre 14; having an outside diameter less than the diameter of the tread of the tyre 14 but greater than the diameter of the shoulder 14B. The radially-outer periphery of the tyre 18F presents a substantially right cylindrical surface having a width in the direction parallel to the axis of the axle 11 which is sufficient for it to bridge at least one groove 25.

The axle 11, the dished annular members 18, the limbs 12A and 12B, the sleeve 17 and the reinforcing washers 19 are all dimensioned to form an axially-extending stack, each part of which is in mutual abutment with one another, there being no space formed between the bolt head 16A and the nut 16B at either end of the bolt 16. Hence the bolt 16 and the nut 16B together comprise clamping means which clamp each dished annular member 18 reinforcing washer 19 and fork limb 12A, 12b together with each reinforcing washer 19 abutting the adjacent end of the sleeve 17 which is thereby placed in compression whilst the bolt shank is in tension.

A dished annular plastic moulding 21 has a flat annular portion 21A which is clamped between the radially-outer annular flange portion 19A of the reinforcing washer 19 and the radially-inner flat annular portion 18A of the dished annular member 18. It also has an outwardly flared annular sidewall 21B which projects into the annular cavity formed between the cylindrical rim 13B and the central hub portion 13A to serve as a thread-guard. The corner formed between the flat annular portion 21A and the annular sidewall 21B of the plastics moulding 21 seats in the shallow cup-shaped cavity formed by the inner flat annular portion 18A and the annular step 18C of the dished annular member 18.

In use of the castor, the radially-outer portion 14C of the tyre 14, which projects between and radially-outwardly beyond the radially-outer rim portions of the dished annular members 18, serves as the tread upon which the wheel 14 rolls on a flat surface. When the wheel 14 is moved onto a moving walkway, of which a representative fragment is shown at 26, that is to say a flat or inclined moving walkway with standard longitudinally-extending grooves 25 formed therein, the tyre 14 drops into one of the those grooves 25 as shown and within which it is received with clearance all around, and the undersides of the radially-outer periphery of the tyre portions 18F of the two dished annular members 18 on either side of the tyre 14 rest upon the upper surface of the moving walkway 26 bridging the respective groove 25 on either side of the groove 25 that receives the wheel portion 14C. The depth of each groove 25 is greater than the amount by which the wheel portion 14C projects radially-outwardly beyond the radially-outer periphery of the tyre portions 18F of the dished annular members 18 so that there is a clearance between the wheel portion 14C and the bottom of the groove 25 within which the wheel portion 14C is received. Hence the load supported by the castor is born by the walkway 26 through the fork and the portions of the two dished annular members 18 extending between the axle 16 and the walkway 26.

The elastomeric material that forms the tyre portions 18F of the dished annular members 18 are slightly compressed so that those tyre portions serve as brakes to retard sliding movement of the castor on the walkway which is a possibility on an inclined walkway.

In the event of wear of the bottom of either of the tyre portions 18F due to its contact with the walkway 26, the nut 16b may be loosened whereafter the respective dished annular member 18 is rotated about the bolt shank to bring an unworn part of the tyre portion 18F to the bottom, the nut 16B then being tightened.

In addition to enabling the lowermost portion of the cylindrical rim portions of the dished annular members 18 to seat upon the parts of the alkway 26 on either side of the groove 25 that receives the radially-outer wheel portion 14C, the geometrical arrangement of the dished annular members 18 and the wheel 10 are such that the spaces between them are restricted so that ingress of foreign matter is inhibited.

The outer edge of the generally cylindrical radially-outer portion 18D of each dished annular portion 18 may be castellated to provide anchorage for the respective tyre 18F against any tendancy for that tyre to be displaced circumferentially relative to the pressing.

## Claims

1. A castor comprising a wheel (10) which is journaled on an axle (11) in a fork which is arranged for swivelling movement about an axis which is normal to the axis of the axle (11) or which is offset from the axis of the axle (11) and parallel to a normal to the axis of the axle (11), the wheel (10) having a profiled annular tyre portion (14C) which is substantially narrower than the remainder (13) of the wheel (10) in a direction which is parallel to the axis of the axle (11) and which is sized and shaped to be received within a standard longitudinally-extending groove (25) of a travelling walkway (26), said annular tyre portion (14C) projecting radially-outwardly from a portion of the remainder of the wheel (10) which is between a pair of annular shoulder portions (14B) which are formed by said remainder and which are spaced apart in said direction there being at least one load bearing element (18) which depends from structure comprising a side portion (12A, 12B) of the fork and the axle (11), the arrangement being such that the load bearing element (18) is above a ground surface upon which the tread (14C) of the wheel (10) is engaged for rolling thereon, whereas the load bearing element (18) rests upon a travelling walkway (26) when the tyre portion (14C) is received within a groove (25) of the walkway (26) so that the wheel (10) is locked onto the walkway (26) and the load supported by the castor is reacted by the walkway (26) through the load bearing element (18), characterised in that the load bearing element has a lower portion (18D and 18F) which projects inwardly toward the tyre portion (14C), terminating close to the side of the tyre portion (14C), radially-outwardly with respect to and past the respective one of said pair of shoulder portions (14B).

2. A castor according to claim 1, wherein there is only one such profiled annular tyre portion (14C).

3. A castor according to claim 1 or claim 2, wherein there are two such load bearing elements (18) arranged symmetrically one on either side of the tyre portion (14C) which projects between them.

4. A castor according to claim 3, wherein the load bearing elements (18) are the lower portions of a pair of dished annular members (18) which each have circumferentially-continuous rim portions (18D and 18F) which project inwardly towards the tyre portion (14C).

5. A castor according to claim 4, wherein a tube (17) extends between the side portions (12A and 12B) of the fork and surrounds the axle (11), and the dished annular member (18) and fork side portion (12A, 12B) at either end of the axle (11) are clamped together by clamping means (16, 16A and 16B) at either end of the axle (11) which is loaded in tension in reaction to the clamping loads which act through the dished annular members (18) and the fork side portions (12A and 12B) to load the tube (17) in compression.

6. A castor according to any one of claims 1 to 5, wherein the underside of the or each load bearing element (18) is formed of a material having a high coefficient of friction.

7. A castor according to claim 6 when appended to claim 4, wherein the material having a high coefficient of friction is in the form of a tyre (18F) which forms the circumferentially-continuous rim of the respective dished annular member (18).

8. A castor according to claim 7, wherein the tyre (18F) is formed by moulding an elastomeric material onto the remainder of the respective dished annular member (18).

9.  A castor according to claim 8, wherein each dished annular member (18) has at least one hole (18E) formed in it in the region of the junction between its circumferentially-continuous rim portion (18D) and its remainder (18A, 18B and 18C), the elastomeric material of the tyre (18F) moulded thereon passing through the or each such hole (18E) to provide anchorage for the tyre (18F).

10. A castor according to claim 8, wherein the edge of the remainder of the respective dished annular member (18) onto which the respective tyre is formed by moulding is castellated to provide an anchorage for the tyre (18F).

**Patentansprüche**

1.  Laufrolle aus einem Rad (10), das auf einer Radachse (11) in einer Gabel verzapft ist, die für eine Schwenkbewegung um eine Achse, die senkrecht zur Achse der Radachse (11) ist oder die versetzt von der Achse der Radachse (11) und parallel zu einer Senkrechten auf die Achse der Radachse (11) ist, wobei das Rad (10) einen profilierten ringförmigen Reifenteil (14C) hat, der im wesentlichen schmaler als der Rest (13) des Rades (10) in einer Richtung parallel zur Achse der Radachse (11) ist und der eine solche Größe und Form hat, um innerhalb einer sich standardmäßig längs erstreckenden Rille (25) eines bewegbaren Gehweges (26) aufgenommen zu werden, wobei der ringförmige Reifenteil (14C) sich radial nach außen von einem Teil des Restes des Rades (10) erstreckt, das zwischen einem Paar ringförmiger Schulterteile (14B) ist, die von dem Rest gebildet sind und die in dieser Richtung voneinander beabstandet sind, wobei mindestens ein Lasttrageelement (18) vorhanden ist, das von der ein Seitenteil (12A, 12B) der Gabel und die Radachse (11) aufweisenden Struktur herabhängt, wobei die Anordnung so ist, daß das Lasttrageelement (18) oberhalb einer Grundfläche ist, auf der die Lauffläche (14C) des Rades (10) angreift, um darauf zu rollen, wohingegen das Lasttrageelement (18) auf einem bewegbaren Gehweg (26) liegt, wenn das Reifenteil (14C) innerhalb einer Rille (25) des Gehweges (26) aufgenommen ist, so daß das Rad (10) auf dem Gehweg (26) blockiert ist und der von der Laufrolle getragenen Last vom Gehweg (26) durch das Lasttrageelement (18) entgegengewirkt wird, dadurch gekennzeichnet, daß das Lasttrageelement einen unteren Teil (18D und 18F) hat, der sich nach innen zum Reifenteil (14C) hin erstreckt, wobei er nahe an der Seite des Reifenteiles (14C) radial außerhalb in bezug auf den jeweiligen Teil des Paars an Schulterteilen (14B) und daran entlang begrenzt ist.

2.  Laufrolle nach Anspruch 1, bei der nur ein solches profiliertes, ringförmiges Reifenteil (14C) vorhanden ist.

3.  Laufrolle nach Anspruch 1 oder 2, bei der zwei solche Lasttrageelemente (18) vorhanden sind, die symmetrisch eines auf jeder Seite des sich zwischen ihnen erstreckenden Reifenteiles (14C) angeordnet sind.

4.  Laufrolle nach Anspruch 3, bei der die lasttragenden Elemente (18) die unteren Teile eines Paares gekümpelter, ringförmiger Teile (18) sind, die jeweils am Umfang umlaufende Felgenteile (18D und 18F) haben, die sich nach innen zum Reifenteil (14C) hin erstrecken.

5.  Laufrolle nach Anspruch 4, bei der ein Rohr (17) sich zwischen den Seitenteilen (12A und 12B) der Gabel erstreckt und die Radachse (11) umgibt und das gekümpelte, ringförmige Teil (18) und das Seitenteil der Gabel (12A, 12B) an jedem Ende der Radachse (11) durch eine Klemmeinrichtung (16, 16A und 16B) an jedem Ende der Radachse (11) zusammengeklemmt werden, wobei die Radachse als Antwort auf die Klemmlasten, die durch die gekümpelten, ringförmigen Teile (18) und die Seitenteile der Gabel (12A und 12B) wirken, unter Spannung gehalten wird, um das Rohr (17) mit Druck zu belasten.

6.  Laufrolle nach einem der Ansprüche 1 bis 5, bei der die Unterseite des oder jedes Lasttrageelementes (18) aus einem Material mit hohem Reibungskoeffizienten gebildet ist.

7.  Laufrolle nach Anspruch 6, wenn dieser auf Anspruch 4 bezogen ist, bei der das Material mit einem hohen Reibungskoeffizienten die Form eines Reifens (18F) hat, der die am Umfang umlaufende Felge des jeweiligen gekümpelten, ringförmigen Teiles (18) bildet.

8.  Laufrolle nach Anspruch 7, bei der der Reifen (18F) durch Formen eines elastischen Polymers auf den Rest des jeweiligen gekümpelten, ringförmigen Teiles (18) gebildet wird.

9.  Laufrolle nach Anspruch 8, bei der jedes gekümpelte, ringförmige Teil (18) mindestens eine Bohrung (18E) hat, die in ihr in dem Verbindungsgebiet zwischen dessen am Umfang umlaufenden Felgenteiles (18D) und dessen Rest (18A, 18B und 18C) gebildet ist, wobei das darauf geformte elastische Polymer des Reifens (18F) durch die oder jede dieser Bohrungen (18E) hindurchgeht, um eine Verankerung für den Reifen (18F) zu schaffen.

10. Laufrolle nach Anspruch 8, bei der die Kante des Restes des jeweiligen gekümpelten, ringförmigen Teiles (18), auf dem der jeweilige Reifen durch Formen gebidet ist, durchbrochen ist, um eine Verankerung für den Reifen (18F) zu schaffen.

## Revendications

1. Roue à pivot comprenant une roue (10) qui est montée sur un essieu (11) dans une fourche qui est conçue pour effectuer un mouvement pivotant autour d'un axe qui est normal à l'axe de l'essieu (11) ou qui est déporté par rapport à l'axe de l'essieu (11) et parallèle à une normale à l'axe de l'essieu (11), la roue (10) ayant une portion de bandage annulaire profilée (14C) qui est substantiellement plus étroite que le reste (13) de la roue (10) dans une direction qui est parallèle à l'axe de l'essieu (11) et qui est dimensionnée et profilée pour être logée à l'intérieur d'une rainure normalisée longitudinale (25) d'une passerelle (26), ladite portion de bandage annulaire (14C) saillant radialement vers l'extérieur à partir d'une portion du reste de la roue (10) qui est située entre une paire de portions d'épaulement annulaire (14B) qui sont formées par ledit reste et qui sont espacées l'une de l'autre dans ladite direction, où il est prévu au moins un élément porteur de charge (18) qui est suspendu à une structure comprenant une portion latérale (12A, 12B) de la fourche et l'essieu (11), l'arrangement étant tel que l'élément porteur de charge (18) est situé audessus d'une surface de sol sur laquelle la bande de roulement (14C) de la roue (10) est engagée pour rouler, tandis que l'élément porteur de charge (18) repose sur une passerelle (26) lorsque la portion de bandage (14C) est logée à l'intérieur d'une rainure (25) ménagée sur la passerelle (26) de telle sorte que la roue soit blockée sur la passerelle (26) et que la charge supportée par la roue à pivot suscite une réaction de la passerelle (26) à travers l'élément porteur de charge (18), caractérisée en ce que l'élément porteur de charge comprend une partie inférieure (18D et 18F) qui est saillante vers l'intérieur en direction de la portion de bandage (14C), se terminant près du flanc de la portion de bandage (14C), radialement vers l'extérieur par rapport à et le long de la portion respective de ladite paire de portions d'épaulement (14B).

2. Roue à pivot suivant la revendication 1, dans laquelle il n'y a qu'une telle portion de bandage annulaire profilée (14C).

3. Roue à pivot suivant la revendication 1 ou 2, dans laquelle il y a deux de ces éléments porteurs de charge (18) disposés symétriquement de part et d'autre de la portion de bandage (14C) qui est saillante entre eux.

4. Roue à pivot suivant la revendication 3, dans laquelle les éléments porteurs de charge (18) constituent les portions inférieures d'une paire de pièces annulaires embouties (18) qui ont chacune des portions de rebord (18D et 18F) circonférentiellement continu qui sont saillantes vers l'intérieur en direction de la portion de bandage (14C).

5. Roue à pivot suivant la revendication 4, dans laquelle un tube (17) s'étend entre les portions latérales (12A et 12 B) de la fourche et entoure l'essieu (11), et la pièce annulaire emboutie (18) et la portion latérale de la fourche (12A, 12B) à l'une ou l'autre extrémité de l'essieu (11) sont serrées l'une contre l'autre par des moyens de serrage (16, 16A et 16B) à l'une et l'autre extrémité de l'essieu (11), qui est sollicité en traction en réaction aux forces de serrage qui agissent à travers les pièces annulaires embouties (18) et les portions latérales (12A et 12B) de la fourche pour solliciter le tube (17) en compression.

6. Roue à pivot suivant l'une ou l'autre des revendications 1 à 5, dans laquelle la face inférieure de ou de chaque élément porteur de charge (18) est constituée d'une matière ayant un coefficient de frottement élevé.

7. Roue à pivot suivant la revendication 6 en relation avec la revendication 4, dans laquelle la matière ayant un coefficient de frottement élevé a la forme d'un bandage (18F) qui forme le rebord circonférentiel continu de la pièce annulaire emboutie (18) respective.

8. Roue à pivot suivant la revendication 7, dans laquelle le bandage (18F) est formé par moulage d'une matière élastomère sur le reste de la pièce annulaire emboutie (18) respective.

9. Roue à pivot suivant la revendication 8, dans laquelle chaque pièce annulaire emboutie (18) présente au moins un trou (18E) formé dans la région de la jonction entre sa portion de rebord circonférentiel continu (18D) et sa partie restante (18A, 18B et 18C), la matière élastomère du bandage (18F) moulée sur celle-ci passant à travers le ou chaque trou (18E) pour assurer un ancrage pour le bandage (18F).

10. Roue à pivot suivant la revendication 8, dans laquelle le bord du reste de la pièce annulaire emboutie (18) respective sur lequel le bandage respectif est formé par moulage est crénelé pour assurer un ancrage pour le bandage (18F).